# EUROPEAN PATENT SPECIFICATION

(11) **EP 0 621 709 B1**
(45) Date of publication and mention of the grant of the patent: **05.08.1998**
(21) Application number: 94104170.9
(22) Date of filing: 17.03.1994
(51) Int. Cl.: H04L 12/40

(54) **Message communication system**
Nachrichtenübertragungssystem
Système de communication des messages

(30) Priority: 23.04.1993 GB 9308442
(43) Date of publication of application: 26.10.1994
(73) Proprietor: MOTOROLA, INC., Schaumburg, IL 60196 (US)
(72) Inventor: Rosen, Benjamin, Ganei Tikva 55900 (IL); Patel, Gil, Ramat-Gan 52-401 (IL); Ben-Arie, Yaron, Ramat-Gan 52-401 (IL); Ginsberg,Avi, Petach-Tikva 49542 (IL)
(74) Representative: Hirsz, Christopher Stanislaw

(56) References cited:
- US-A- 4 996 666
- UND-ODER-NOR + STEUERUNGSTECHNIK, vol.23, no.10, October 1990, MAINZ, DE pages 32 - 34 P. ZIMMERMANN ET AL 'Controller Area Network (CAN) - Ein universeller Buscontroller für den Einsatz im KFZ-Bereich'
- ELEKTRONIK, vol.38, no.4, 17 February 1989, MÜNCHEN, DE pages 102 - 105 F. BEIL ET AL 'Eine bitserielle Universal-Schnittstelle nicht nur für Kfz-Anwendungen'
- IBM TECHNICAL DISCLOSURE BULLETIN, vol.22, no.7, December 1979, ARMONK, NY, US pages 2671 - 2672 'Parallel-Search Max/Min Word Algorithm'

## Description

### Field of the Invention

This invention relates to a message communication system for serial communication between a host processor and peripheral devices.

### Background of the Invention

In applications, such as automotive applications, serial message communication systems are typically required to provide interfaces between a host processor, such as vehicle management controller, and peripherals, such as a temperature controller, gear controller, and engine controller.

A convenient communication protocol used see e.g. disclosures in UND-ODER-NOR + STEUERUNGSTECHNIK, vol.23, no.10, October 1990, MAINZ, DE pages 32 - 34 P. ZIMMERMANN ET AL 'Controller Area Network (CAN) - Ein universeller Buscontroller für den Einsatz im KFZ-Bereich'
and
ELEKTRONIK, vol.38, no.4, 17 February 1989, MÜNCHEN, DE pages 102 - 105 F. BEIL ET AL 'Eine bitserielle Universal-Schnittstelle nicht nur für Kfz-Anwendungen' in such applications utilises messages for communicating data between the host and peripherals wherein each message comprises an n-bit data field and an m-bit identifier field (where n and m are positive integers). The data field contains the data to be transferred by the message and the identifier (ID) field categorises the data in each message. For example, all data relating to temperature has a unique ID.

The message communication system receives and transmits messages between the host processor and the peripherals and temporarily stores the received and transmitted messages in storage buffers. The storage buffers are usually implemented using associative memory or register files.

During message transmission, the ID fields of the stored messages to be transmitted are used to prioritise the messages to be transmitted by the system. In known arrangements, the prioritisation process takes as many cycles as the number of messages to be transmitted. The time required for such prioritisation can be a significant disadvantage.

During message reception, the ID field of each of the received messages is used to determine whether the message is to be received by the system. With the associative memory implementation, in order to match the received messages, each bit of the ID field is coupled to a comparator. Such an arrangement is fast, but requires a large area to implement all the comparators.

Thus, the prior art arrangements have a number of disadvantages: they require significant silicon area to implement, and require significant time for prioritisation of the message transmission and are therefore expensive. Register files also require significant silicon area.

There is therefore a need to provide a message communication system for receiving and transmitting messages between a host processor and peripheral devices which is simple and inexpensive to implement.

### Summary of the Invention

In accordance with the present invention there is provided a message communication system for receiving, storing and transmitting messages, wherein each message comprises ID information and data, the ID information of each message providing an indication of the priority of each message, the message communication system comprising:
serial output means having an input for receiving messages and an output for transmitting messages;
RAM storage means for storing messages received by the output means and transmit messages to be transmitted by the output means, the storage means having a first port coupled to the output means for transferring the data of the received and transmit messages between the output means and the storage means, a second port for transferring messages to and from the message communication system, a third port for serially transferring ID information of transmit messages from the storage means to the output means and a fourth port for serially transferring ID information of received messages from the output means to the storage means, the RAM storage means further comprising:
first logic coupled to receive the ID information of each of the stored transmit messages for determining the stored transmit message with the greatest priority and for generating a signal in response thereto whereby the data of the determined transmit message is transferred from the storage means to the output means, the ID of the determined transmit message is transferred serially to the output means via the third port; and
second logic coupled to the fourth port so as to receive the ID information of the received messages for determining which of the received messages are to be stored in the storage means and for generating a signal in response thereto whereby the data of the determined received messages is transferred from the output means via the first port to the storage means for storage therein.

### Brief Description of the Drawings

A message communication system in accordance with the present invention will now be described, by way of example only, with reference to the accompanying drawings in which:
Fig. 1 is a simplified block schematic diagram of a processing system incorporating a message communication interface;
Fig. 2 is a block schematic diagram of a message communication system in accordance with the present invention;
Fig. 3 shows a representation of a transmit data structure; and
Fig. 4 shows a representation of a receive data structure.

### Detailed Description

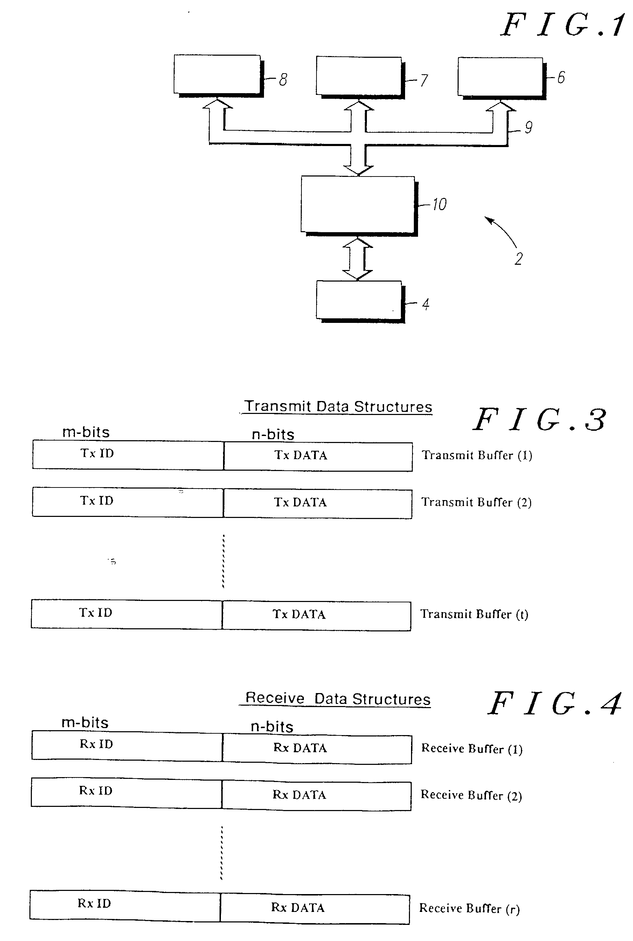

In a processing system 2, as shown in Fig. 1, a host processor 4 transmits messages to and receives messages from peripheral devices 6-8 via a message communication interface 10 and a serial bus 9.

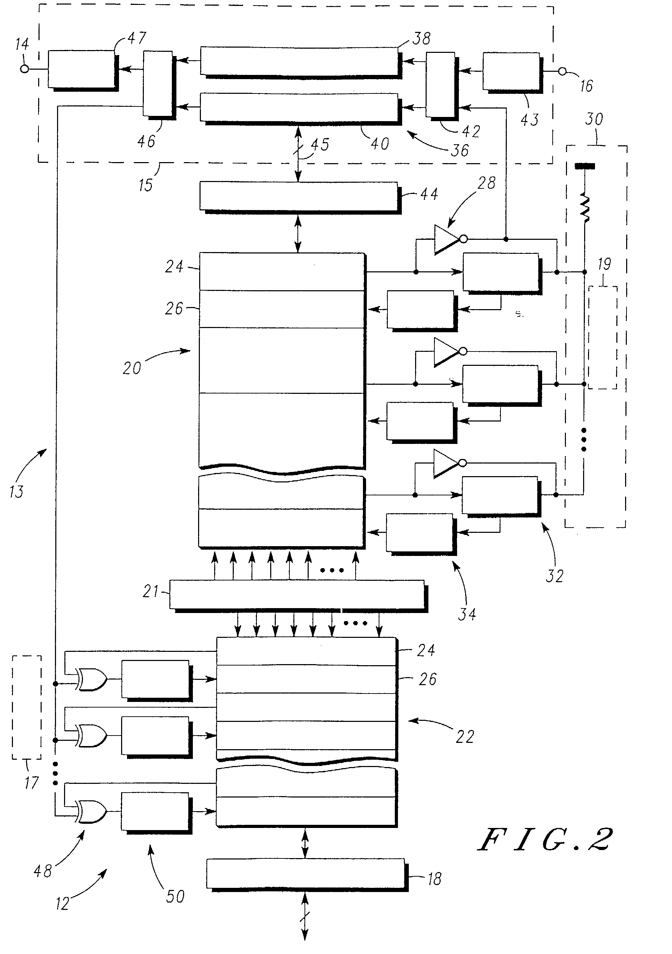

Referring now also to Figs. 3 and 4, for a preferred communications protocol, each one of the transmit and receive messages is a fixed length message comprising an ID field TxID, RxID of m bits and a data field TxDATA, RxDATA of n bits. During message transmission, the ID fields of the stored messages to be transmitted are used to prioritise the messages to be transmitted by the message communication interface. During message reception, the ID field of each of the received messages is used to determine whether the message is to be received by the interface.

A message communication system 12 in accordance with a preferred embodiment of the present invention, for use in the message communication interface 10 of Fig. 1, is shown in Fig. 2. The message communication system 12 comprises a four-port storage portion 13 and a serial output portion 15. The four-port storage portion 13 is implemented in Random Access Memory (RAM) and has a first parallel port 18 for coupling to the host processor via a data bus, a second parallel port 44 for coupling to the serial output portion 15 and first 17 and second 19 serial ports coupled to the serial output portion 15. The serial output portion 15 comprises a transmit pin 14 and a receive pin 16 for coupling to the peripheral devices 6-8 via serial bus 9.

The storage portion 13 comprises transmit buffers 20 for storing messages to be transmitted by the message communication system 12 and receive buffers 22 for storing messages received by the message communication system 12. The transmit 20 and the receive 22 buffers are implemented in RAM. The transmit buffers 20 can store up to t messages and the receive buffers 22 can store up to r received messages. Both buffers 20 and 22 are arranged to store the m-bit ID of a message in an ID storage field 24 and the associated n-bit data in a data storage field 26.

The structure of the message communication system 12 in accordance with the invention will be described in more detail with reference to a transmit operation, during which the host transmits messages to the peripheral devices, and a receive operation, during which the message communication system receives messages from the peripheral devices for the host.

In the transmit operation, the host sends messages to the message communication system 12 via the host data bus and port 18. The ID and data of the sent messages are written to the transmit buffers 20. Each transmit buffer which is written to becomes an 'active transmit buffer'.

The message communication system 12 is enabled for a transmit operation in response to detecting that the serial bus 9 is free when it has a message to be transmitted. An arbitration process is carried out to determine which one of the active transmit buffers has the highest priority: that is, which of the stored transmit messages has the highest priority.

The arbitration process utilises the IDs of the stored transmit messages to determine which of the messages is to be transmitted first on the serial bus 9. The arbitration process is performed bit serially through m cycles using arbitration logic 28. The arbitration logic 28 comprises t comparators 32 and t flag generators 34. Each one of the comparators having a first input coupled to a respective one of the ID storage fields 24, a second input coupled to wired AND logic 30, and an output coupled to a respective one of the flag generators 34. Each one of the flag generators 34 generates a transmit ID flag which is coupled to a respective one of the data storage fields 26. Initially, each transmit ID flag is set to '1' (winner).

In each arbitration cycle, an ID bit is read from each of the active transmit buffers and logically combined with the other ID bits read from the other active transmit buffers in the wired AND logic 30. The Most Significant Bit (MSB) of the m ID bits is read first. Each of the read ID bits is compared to the 'wired AND' result in a respective one of the t comparators 32 and a transmit ID flag generated in dependence on the output of the respective comparator. If the bit read from an active transmit buffer is recessive and the wired AND result dominant, then that transmit buffer 'loses', the transmit ID flag is reset to '0' (loser) and the transmit buffer is ignored in the next arbitration cycle. For the other values of the ID bit and wired AND result, no action is taken so that the transmit ID flag remains set at '1'. Table 1 shows the possible combinations for transmit ID flag generation.

**Table 1**

| ID Bit Value | AND Result | Action | Transmit ID Flag Value |
|---|---|---|---|
| 0 | 0 | non | 1 |
| 1 | 0 | lose | 0 |
| 1 | 1 | non | 1 |

At the end of each arbitration cycle, the wired AND result, whose value represents the value of the 'winning' ID bits, is shifted via a switch 42 to an ID shift register 38 of a transmit/receive shifter 36 in serial output portion 15. The cycle is then repeated without the losing active transmit buffers.

After m arbitration cycles, the arbitration process is complete and the ID shift register 38 contains the ID of the active transmit buffer having the highest priority: that is, the ID of the winning transmit buffer. At the completion of the arbitration process, the transmit ID flag of the winning active transmit buffer is set to '1' and the data stored in the data storage field 26 of the winning active transmit buffer is loaded in parallel via the data port 44 and n-bit bus 45 to a data shift register 40 of the transmit/receive shifter 36. Once all the n bits of data are loaded into the data shift register 40, the 'winning' message is transmitted to the serial bus 9.

In the event that the ID's of two stored transmit messages are the same, additional logic (not shown) selects the lower of the two active transmit buffers for transmission.

The 'winning' message in the transmit/receive shifter 36 is transmitted to the serial bus 9, via a switch 46, transmit logic 47 which converts the 'winning' message according to the protocol of the serial bus 9, and the transmit pin 14, by first shifting-out the 'winning' ID from the ID shift register 38, starting with the Most Significant Bit (MSB), and then shifting-out the 'winning' data from the data shift register 40. In the preferred embodiment, the message communication system has a 'self-listening' function which means that the bits shifted-out to the serial bus return bit serially through the receiver pin 16 and into the same transmit/receive shifter 36 via the switch 42 and receive logic 43.

The switches 42 and 46 select between the transmit ID or data or between the received ID or data.

The storage portion 13 further comprises read select logic 21 which successively selects each bit of the transmit or receive buffers for transmission or reception respectively. In the preferred embodiment, the read select logic 21 is implemented as a 'marching '1" shift register.

In the receive operation, the host writes the m-bit IDs of the messages to be received by the message communication system 12 to the ID storage fields 24 of a predetermined number of the receive buffers 22. Writing an ID to a receive buffer activates that receive buffer.

Logic for determining whether a message is to be received and stored by the message communication system 12 comprises r comparators 48 and r match flag generators 50. Each of the r comparators 48 has a first input coupled to receive the ID bits of the received message, a second input coupled to the ID storage field 24 of a respective one of the receive buffers 22 and an output coupled to a respective one of the match flag generators. Each one of the match flag generators 50 generates a receive ID flag which is coupled to a respective one of the data storage fields 26 of the receive buffers 22. Initially, each receive ID flag is set to '1' (match).

A message is received at the receive pin 16 and serially shifted into the transmit/receive shifter 36 via the switch 42. The ID bits of the incoming message are received first. As the ID bits of an incoming message is shifted into the ID shift register 38, each received bit is simultaneously coupled via switch 46 to each one of the r comparators 48. Each one of the comparators of the active receive buffers compares each received ID bit with the corresponding ID bits from the respective active receive buffer and provides an output to the respective match flag generator. For each comparison, if there is no match, the respective ID flag is cleared to '0' and if there is a match, the respective ID flag is left set to '1'.

After all m ID bits are received in the ID shift register 38 and compared in the comparators, only the appropriate receive ID flags are still set to '1' (match) to indicate the active receive buffers having an ID which matches the received ID. Thus, the comparison is complete after m cycles. The data of the incoming message is then shifted into the data shift register 40 of the transmit/receive shifter 36.

In the preferred embodiment, each comparator comprises an exclusive OR gate. If the ID bits match, the output of the exclusive OR gate does not reset the receive ID flag. If the ID bits do not match, the output of the exclusive OR gate resets the receive ID flag to '0'.

Once all n data bits of the incoming message are shifted into the data shift register 40, the n data bits are written, via data port 44, simultaneously to the data storage fields 26 of the active receive buffers having receive ID flags set to '1'. The host can then read the incoming messages stored in the active receive buffers 22.

It will be appreciated that unlike the known register file implementations which utilise parallel ports for transferring the data and ID of the messages between the storage buffers and output registers, the present invention utilises a parallel port for transferring data between the storage portion 13 and the serial output portion 15, but serial ports 17 and 19 for transferring the ID bits serially between the storage portion 13 and the serial output portion 15. This ensures significant space saving.

In summary, the message communication system in accordance with the present invention provides a system for transmitting and receiving messages using RAM-based storage buffers having two parallel ports and two serial ports. The serial ports transfer serially the ID bits of the transmitted and received messages. Logic is used to determine, from the ID bits, which message of the messages to be transmitted has the highest priority and to provide the ID bits of the highest priority message serially to one of the serial ports. Additional logic receives the ID bits of the received messages serially from the other serial port and determines whether the messages are to be stored in the RAM-based storage buffer, by comparing the received ID bits with previously stored ID bits.

Since the message communication system is implemented in RAM, the total hardware cost and silicon size is significantly reduced.

Furthermore, the transmit message prioritising and the received messages ID comparing steps are both performed bit serially in m cycles (where m is the number of ID bits) using simple logic and thus, are relatively fast but require minimal hardware to implement.

Since the implementation of the transmit message prioritising step and the received message ID comparing step are similar, the same compact RAM structure can be used for the transmit buffers and the receive buffers.

A further advantage of the message communication system in accordance with the present invention is that only one shifter is used by both the receiver and transmitter of the system. No additional latches or temporary registers are needed to store the ID or data, or to store an intermediate result of the ID transmit message prioritising step or the received message ID comparing step.

It will be appreciated that it is not intended that the invention be limited to the logic described above with reference to the setting and resetting of the transmit and receive ID flags.

## Claims

1. A message communication system for receiving, storing and transmitting messages, wherein each message comprises ID information and data, the ID information of each message providing an indication of the priority of each message, characterized in that the message communication system comprises :
serial output means (15) having an input (16) for receiving messages and an output (14) for transmitting messages;
RAM storage means (13) for storing messages received by the serial output means (15) and transmit messages to be transmitted by the serial output means (15), the RAM storage means (13) having a first port (44) coupled to the serial output means (15) for transferring the data of the received and transmit messages between the serial output means (15) and the RAM storage means (13), a second port (18) for transferring messages to and from the message communication system, a third port (19) for serially transferring ID information of transmit messages from the RAM storage means (13) to the serial output means (15) and a fourth port (17) for serially transferring ID information of received messages from the serial output means (15) to the RAM storage means (13), the RAM storage means (13) further comprising:
first logic means (28) coupled to receive the ID information of each of the stored transmit messages for determining the stored transmit message with the greatest priority and for generating a signal in response thereto whereby the data of the determined transmit message is transferred from the RAM storage means (13) to the serial output means (15), the ID of the determined transmit message is transferred serially to the serial output means (15) via the third port (19); and
second logic means (48,50,21) coupled to the fourth port (17) so as to receive the ID information of the received messages for determining which of the received messages are to be stored in the RAM storage means (13) and for generating a signal in response thereto whereby the data of the determined received messages is transferred from the serial output means (15) via the first port (44) to the RAM storage means (13) for storage therein.

2. The message communication system according to claim 1 wherein the ID information comprises m ID bits and the first logic means (28) determines the stored transmit message with the greatest priority in m cycles by comparing in m consecutive cycles each ID bit of a stored transmit message with the corresponding ID bits of the other stored messages, and by outputting to the serial output means (15) via the third port (19) after each consecutive comparison the ID bit with the determined greatest priority.

3. The message communication system according to claim 1 wherein the ID information comprises m ID bits and the first logic means (28) comprises:
means for logically combining (30) in m consecutive cycles each of the m ID bits of a stored transmit message with the corresponding ID bits of other stored transmit messages and for providing a result bit for each consecutive combination, each result bit being serially transferred to the serial output means (15) via the third port (19);
means for comparing (32) each one of the combined ID bits with the corresponding result bit and for providing a comparison result for the respective stored transmit message for each consecutive combination; and
means for generating a flag (34) for each stored transmit message, each flag being switchable from a first state to a second state in dependence on the comparison results, wherein after the m consecutive cycles the stored transmit message with a flag having the first state corresponds to the determined transmit message and the result bits transferred to the serial output means (15) represent the ID information of the determined transmit message.

4. The message communication system according to claim 3 wherein the means for logically combining (30) in response to the flag of a stored transmit message being switched from the first state to the second state, ignores the ID bits of the switched stored transmit message in following cycles.

5. The message communication system according to claim 3 or 4 wherein the means for logically combining (30) comprises wired AND logic.

6. The message communication system according to claim 5 wherein the comparing means (32) provides a comparison result having a first value when the combined ID bit of a stored transmit message matches the result bit and a second value when the combined ID bit does not match the result bit and wherein the flag generating means (34) switches the flag from the first state to the second state when the comparison result has the second value.

7. The message communication system according to any preceding claim wherein the RAM storage means (13) comprises a receive buffer means (22) for storing the received messages and a transmit buffer means (20) for storing the transmit messages.

8. The message communication system according to claim 7 wherein each buffer means (20,22) comprises a plurality of message storage locations, each message storage location comprising an ID storage field (24) for storing the ID information and a data storage field (26) for storing the data.

9. The message communication system according to claim 3 and claim 7 or 8 wherein the comparing means (32) comprises a plurality of comparators corresponding to the plurality of message storage locations of the transmit buffer means (22), each comparator having a first input coupled to a respective ID storage field (24), a second input coupled to the means for logically combining (30) and an output coupled to the flag generating means (34).

10. The message communication system according to any preceding claim wherein the ID information comprises m ID bits and the RAM storage means (13) stores predetermined ID informations received via the second port (18) and wherein the second logic means (48,50,21) comprises comparing means (48) for serially comparing each of the m ID bits of the received messages with corresponding ID bits of the predetermined ID informations, the second logic means (48,50,21) generating the signal when the ID bits of the received messages match the ID bits of at least one of the predetermined ID informations stored in the RAM storage means (13).

11. The message communication system according to claim 8 and 10 wherein the predetermined ID informations are stored in ID storage fields (24) of the receive buffer means (22) and the comparing means of the second logic means comprises a plurality of comparators (48) corresponding to the plurality of message storage locations of the receive buffer means (22), each comparator (48) having a first input coupled to the fourth port (17), a second input coupled to a respective ID storage field (24) and an output coupled to a match flag generating means (50), the match flag generating means (50) generating a flag for each storage location of the receive buffer means (22), each flag being switchable from a first state which indicates a match comparison result to a second state which indicates a no-match comparison result in dependence on the output of the respective comparator, wherein after m consecutive comparison cycles the second logic means (48,50) generates the signal for the storage locations with flags having the first state whereby data of the received message is transferred from the serial output means to the data storage fields (26) of of the storage locations with flags having the first state.

12. The message communication system according to any preceding claims wherein the serial output means (15) comprises a first shift register (40) for serially transferring data and a second shift register (38) for serially transferring ID information.

13. A processing system (2) comprising:
a host processor (4);
a plurality of peripheral devices (6-8);
a message communication system (10,12) as claimed in any preceding claim for transferring messages between the host processor (4) and the peripheral devices (6-8), a serial output means of the message communication system being coupled to the plurality of peripheral devices (6-8) via a serial bus (9) and the host processor (4) being coupled to the second port of the message communication system (12).

## Patentansprüche

1. Nachrichtenübertragungssystem zum Empfangen, Speichern und Senden von Nachrichten, wobei jede Nachricht ID-Informationen und Daten enthält, wobei die ID-Informationen jeder Nachricht eine Anzeige der Priorität jeder Nachricht bereitstellen, gekennzeichnet dadurch, daß das Nachrichtenübertragungssystem umfaßt:
• serielle Ausgabemittel (15), die einen Eingang (16) zum Empfang von Nachrichten und einen Ausgang (14) zum Senden von Nachrichten besitzen;
• RAM-Speichermittel (13) zur Speicherung von Nachrichten, die durch die seriellen Ausgabemittel (15) empfangen wurden, und zur Speicherung von Sendenachrichten, die durch die seriellen Ausgabemittel (15) übertragen werden sollen, wobei die RAM-Speichermittel (13) ein erstes Tor (44) haben, das an die seriellen Ausgabemittel (15) zur Übermittlung der Daten der Empfangs- und Sendenachrichten zwischen den seriellen Ausgabemitteln (15) und den RAM-Speichermitteln (13) geschaltet ist, ein zweites Tor (18) zur Übermittlung von Nachrichten an und von dem Nachrichtenübertragungssystem, ein drittes Tor (19) zur seriellen Übermittlung von ID-Informationen der Sendenachrichten von den RAM-Speichermitteln (13) an die seriellen Ausgabemittel (15) und ein viertes Tor (17) zur seriellen Übermittlung von ID-Informationen der Empfangsnachrichten von den seriellen Ausgabemitteln (15) an die RAM-Speichermittel (13), wobei die RAM-Speichermittel (13) weiter umfassen:
• erste Logikmittel (28) die geschaltet sind, um die ID-Informationen jeder der gespeicherten Sendenachrichten zur Bestimmung der gespeicherten Sendenachricht mit der höchsten Priorität zu empfangen, und in Reaktion darauf zur Erzeugung eines Signals, wodurch die Daten der bestimmten Sendenachricht von den RAM-Speichermitteln (13) zu den seriellen Ausgabemitteln (15) übermittelt werden, wobei die ID der bestimmten Sendenachricht seriell über das dritte Ausgangstor (19) zu den seriellen Ausgabemitteln (15) übermittelt werden; und
• zweite Logikmittel (48, 50, 21), die an das vierte Tor (17) geschaltet sind, um die ID-Informationen der Empfangsnachrichten zur Bestimmung, welche der Empfangsnachrichten in den RAM-Speichermitteln (13) gespeichert werden sollen, zu empfangen, und in Reaktion darauf zur Erzeugung eines Signals, wodurch die Daten der bestimmten Empfangsnachrichten von den seriellen Ausgabemitteln (15) über das erste Tor (44) an die RAM-Speichermittel (13) zur dortigen Speicherung übermittelt werden.

2. Nachrichtenübertragungssystem nach Anspruch 1, wobei die ID-Informationen m ID-Bits enthalten und die ersten Logikmittel (28) in m Zyklen die gespeicherte Sendenachricht mit der höchsten Priorität bestimmen durch den Vergleich jedes ID-Bits einer gespeicherten Sendenachricht mit den entsprechenden ID-Bits der anderen gespeicherten Nachrichten in m aufeinanderfolgenden Zyklen und durch die Ausgabe des ID-Bits mit der bestimmten höchsten Priorität an die seriellen Ausgabemittel (15) über das dritte Tor (19) nach jedem aufeinanderfolgenden Vergleich.

3. Nachrichtenübertragungssystem nach Anspruch 1, wobei die ID-Informationen m ID-Bits enthalten und die ersten Logikmittel (28) umfassen:
• Mittel zur logischen Kombinierung (30) jedes der m ID-Bits einer gespeicherten Sendenachricht mit den entsprechenden ID-Bits anderer gespeicherter Sendenachrichten in m aufeinanderfolgenden Zyklen und zur Bereitstellung eines Ergebnisbits für jede aufeinanderfolgende Kombinierung, wobei jedes Ergebnisbit seriell an die seriellen Ausgabemittel (15) über das dritte Tor (19) übermittelt wird;
• Mittel zum Vergleich (32) jedes der kombinierten ID-Bits mit dem entsprechenden Ergebnisbit und zur Bereitstellung eines Vergleichsergebnisses für die entsprechende gespeicherte Sendenachricht für jede aufeinanderfolgende Kombination; und
• Mittel zur Erzeugung eines Kennzeichenbits (34) für jede gespeicherte Sendenachricht, wobei jedes Kennzeichenbit in Abhängigkeit von den Vergleichsergebnissen von einem ersten Zustand in einen zweiten Zustand umschaltbar ist, wobei nach den m aufeinanderfolgenden Zyklen die gespeicherte Sendenachricht mit einem Kennzeichenbit, das den ersten Zustand besitzt, der bestimmten Sendenachricht entspricht und die Ergebnisbits, die zu den seriellen Ausgabemitteln 15 übermittelt werden, die ID-Informationen der bestimmten Sendenachricht darstellen.

4. Nachrichtenübertragungssystem nach Anspruch 3, wobei die Mittel zur logischen Kombinierung (30) in Reaktion auf das Kennzeichenbit einer gespeicherten Sendenachricht, das vom ersten Zustand in den zweiten Zustand umgeschaltet wird, die ID-Bits der umgeschalteten gespeicherten Sendenachricht in den folgenden Zyklen ignorieren.

5. Nachrichtenübertragungssystem nach Anspruch 3 oder 4, wobei die Mittel zur logischen Kombinierung (30) eine verdrahtete UND-Logik enthalten.

6. Nachrichtenübertragungssystem nach Anspruch 5, wobei die Vergleichsmittel (32) ein Vergleichsergebnis bereitstellen, das einen ersten Wert hat, wenn das kombinierte ID-Bit einer gespeicherten Sendenachricht mit dem Ergebnisbit übereinstimmt, und einen zweiten Wert, wenn das kombinierte ID-Bit nicht mit dem Ergebnisbit übereinstimmt, und wobei die Kennzeichenbiterzeugungsmittel (34) das Kennzeichenbit vom ersten Zustand in den zweiten Zustand umschalten, wenn das Vergleichsergebnis den zweiten Wert hat.

7. Nachrichtenübertragungssystem nach einem der voranstehenden Ansprüchen, wobei die RAM-Speichermittel (13) Empfangspuffermittel (22) zur Speicherung der Empfangsnachrichten und Sendepuffermittel (20) zur Speicherung der Sendenachrichten enthalten.

8. Nachrichtenübertragungssystem nach Anspruch 7, wobei jedes Puffermittel (20, 22) eine Vielzahl von Nachrichtenspeicherplätzen enthält, wobei jeder Nachrichtenspeicherplatz ein ID-Speicherfeld (24) zur Speicherung der ID-Informationen und ein Datenspeicherfeld (26) zur Speicherung der Daten enthält.

9. Nachrichtenübertragungssystem nach Anspruch 3 und Anspruch 7 oder 8, wobei die Vergleichsmittel (32) eine Vielzahl von Vergleichern entsprechend der Vielzahl der Nachrichtenspeicherplätze der Sendepuffermittel (22) enthalten, wobei jeder Vergleicher einen ersten Eingang hat, der an ein entsprechendes ID-Speicherfeld (24) geschaltet ist, einen zweiten Eingang, der an Mittel zur logischen Kombinierung (30) geschaltet ist, und einen Ausgang, der an die Kennzeichenbiterzeugungsmittel (34) geschaltet ist.

10. Nachrichtenübertragungssystem nach einem der vorhergehenden Ansprüche, wobei die ID-Informationen m ID-Bits enthalten und die RAM-Speichermittel (13) die vorbestimmten ID-Informationen speichern, die über das zweite Tor (18) empfangen werden, und wobei die zweiten Logikmittel (48, 50, 21) Vergleichsmittel (48) zum seriellen Vergleichen jedes der m ID-Bits der Empfangsnachrichten mit entsprechenden ID-Bits der vorbestimmten ID-Informationen enthalten, wobei die zweiten Logikmittel (48, 50, 21) das Signal erzeugen, wenn die ID-Bits der Empfangsnachrichten mit den ID-Bits zumindest einer der vorbestimmten ID-Informationen, die in den RAM-Speichermitteln (13) gespeichert sind, übereinstimmen.

11. Nachrichtenübertragungssystem nach Anspruch 8 und 10, wobei die vorbestimmten ID-Informationen in ID-Speicherfeidern (24) der Empfangspuffermittel (22) gespeichert werden und die Vergleichsmittel der zweiten Logikmittel eine Vielzahl von Vergleichern (48) entsprechend der Vielzahl der Nachrichtenspeicherplätze der Empfangspuffermittel (22) enthalten, wobei jeder Vergleicher (48) einen ersten Eingang hat, der an das vierte Tor (17) geschaltet ist, einen zweiten Eingang, der an ein entsprechendes ID-Speicherfeld (24) geschaltet ist, und einen Ausgang, der an Übereinstimmungskennzeichenbiterzeugungsmittel (50) geschaltet ist, wobei die Übereinstimmungskennzeichenbiterzeugungsmittel (50) ein Kennzeichenbit für jeden Speicherplatz der Empfangspuffermittel (22) erzeugen, wobei jedes Kennzeichenbit in Abhängigkeit des Ausgangs des entsprechenden Vergleichers von einen ersten Zustand, der ein Überstimmungsvergleichsergebnis anzeigt, in einen zweiten Zustand, der ein Nichtübereinstimmungsvergleichsergebnis anzeigt, umschaltbar ist, wobei nach m aufeinanderfolgenden Vergleichs zyklen die zweiten Logikmittel (48, 50) das Signal für die Speicherplätze mit Kennzeichenbits, die den ersten Zustand haben, erzeugen, wodurch die Daten der Empfangsnachricht von den seriellen Ausgabemitteln zu den Datenspeicherfeldern (26) der Speicherplätze mit Kennzeichenbits, die den ersten Zustand haben, übermittelt werden.

12. Nachrichtenübertragungssystem nach einem der vorhergehenden Ansprüche, wobei die seriellen Ausgabemittel (15) ein erstes Schieberegister (40) zur seriellen Übermittlung von Daten und ein zweites Schieberegister (38) zur seriellen Übermittlung der ID-Informationen enthalten.

13. Verarbeitungssystem (2), umfassend:
• einen Hauptprozessor (4);
• eine Vielzahl von peripheren Einrichtungen (6-8);
• ein Nachrichtenübertragungssystem (10, 12) wie in einem der vorhergehenden Ansprüche beansprucht zur Übermittlung von Nachrichten zwischen dem Hauptprozessor (4) und den peripheren Einrichtungen (6-8), wobei serielle Ausgabemittel des Nachrichtenübertragungssystems über einen seriellen Bus (9) an die Vielzahl der peripheren Einrichtungen (6-8) geschaltet sind und der Hauptprozessor (4) an das zweite Tor des Nachrichtenübertragungssystems (12) geschaltet ist.

## Revendications

1. Système de transmission de messages destiné à recevoir, mémoriser et émettre des messages, où chaque message comprend une information ID et des données, l'information ID de chaque message fournissant une indication de la priorité de chaque message, le système de transmission de messages étant caractérisé en ce qu'il comprend :
un moyen de sortie série (15) possédant une entrée (16) destinée à recevoir des messages et une sortie (14) destinée à émettre des messages ;
un moyen de mémorisation du type RAM (13) servant à mémoriser des messages reçus par le moyen de sortie série (15) et des messages d'émission devant être émis par le moyen de sortie série (15), le moyen de mémorisation de type RAM (13) ayant un premier port (44) couplé au moyen de sortie série (15) afin de transférer les données des messages reçus et d'émission entre le moyen de sortie série (15) et le moyen de mémorisation de type RAM (13), un deuxième port (18) servant à transférer les messages au système de transmission de message et en provenance de celui-ci, un troisième port (19) servant à transférer en série l'information ID de messages d'émission du moyen de mémorisation de type RAM (13) au moyen de sortie série (15), et un quatrième port (17) servant à transférer en série l'information ID de messages reçus du moyen de sortie série (15) au moyen de mémorisation de type RAM (13), le moyen de mémorisation de type RAM (13) comprenant en outre :
un premier moyen logique (28) couplé de façon à recevoir l'information ID de chacun des messages d'émission mémorisés afin de déterminer le message d'émission mémorisé ayant la plus grande priorité et de produire, en réponse, un signal de sorte que les données du message d'émission déterminé soient transférées du moyen de mémorisation de type RAM (13) au moyen de sortie série (15), l'information ID du message d'émission déterminé étant transférée en série au moyen de sortie série (15) via le troisième port (19); et
un deuxième moyen logique (48, 50, 21) couplé au quatrième port (17) de façon à recevoir l'information ID des messages reçus afin de déterminer quels messages parmi les messages reçus doivent être mémorisés dans le moyen de mémorisation de type RAM (13) et de produire, en réponse, un signal de sorte que les données des messages reçus déterminés soient transférées, via le premier port (44), du moyen de sortie série (15) au moyen de mémorisation de type RANI (13) pour y être mémorisées.

2. Système de transmission de messages selon la revendication 1, où l'information ID comprend m bits ID et le premier moyen logique (28) détermine le message d'émission mémorisé ayant la plus grande priorité en m cycles en comparant, en m cycles consécutifs, chaque bit ID d'un message d'émission mémorisé avec les bits ID correspondants des autres messages mémorisés, et en délivrant au moyen de sortie série (15), via le troisième port (19), après chaque comparaison consécutive, le bit ID ayant la plus grande priorité déterminée.

3. Système de transmission de messages selon la revendication 1, où l'information ID comprend m bits ID et le premier moyen logique (28) comprend :
un moyen servant à combiner logiquement (30), en m cycles consécutifs, chacun des m bits ID d'un message d'émission mémorisé avec les bits ID correspondants d'autres messages d'émission mémorisés et à produire un bit de résultat pour chaque combinaison consécutive, chaque bit de résultat étant transféré en série au moyen de sortie série (15) via le troisième port (19);
un moyen servant à comparer (32) chacun des bits ID combinés avec le bit de résultat correspondant et à produire un résultat de comparaison pour le message d'émission mémorisé respectif relatif à chaque combinaison consécutive ; et
un moyen servant à produire un drapeau (34) pour chaque message d'émission mémorisé, chaque drapeau pouvant être commuté d'un premier état à un deuxième état en fonction des résultats de comparaison, où, après les m cycles consécutifs, le message d'émission mémorisé ayant un drapeau qui possède le premier état correspond au message d'émission déterminé et les bits de résultat transférés au moyen de sortie série (15) représentent l'information ID du message d'émission déterminé.

4. Système de transmission de messages selon la revendication 3, où le moyen de combinaison logique (30), en réponse au fait que le drapeau d'un message d'émission mémorisé commute du premier état au deuxième état, ignore les bits ID du message d'émission mémorisé commuté dans les cycles suivants.

5. Système de transmission de messages selon la revendication 3 ou 4, où le moyen de combinaison logique (30) comprend un circuit logique ET câblé.

6. Système de transmission de messages selon la revendication 5, où le moyen de comparaison (32) produit un résultat de comparaison ayant une première valeur lorsque le bit ID combiné d'un message d'émission mémorisé est apparié avec le bit de résultat et une deuxième valeur lorsque le bit ID combiné n'est pas apparié avec le bit de résultat, et où le moyen de production de drapeau (34) fait commuter le drapeau du premier état au deuxième état lorsque le résultat de comparaison possède la deuxième valeur.

7. Système de transmission de messages selon l'une quelconque des revendications précédentes, où le moyen de mémorisation de type RMA (13) comprend un moyen tampon de réception (22) servant à mémoriser les messages reçus et un moyen tampon d'émission (20) servant à mémoriser les messages d'émission.

8. Système de transmission de messages selon la revendication 7, où chaque moyen tampon ((20, 22) comprend une pluralité d'emplacements de mémorisation de message, chaque emplacement de mémorisation de message comprenant une zone (24) de mémorisation d'information ID qui mémorise l'information ID et une zone (26) de mémorisation de données qui mémorise les données.

9. Système de transmission de messages selon la revendication 3 et la revendication 7 ou 8, où le moyen de comparaison (32) comprend une pluralité de comparateurs correspondant à la pluralité d'emplacements de mémorisation de message du moyen tampon d'émission (22), chaque comparateur ayant une première entrée couplée à une zone (24) de mémorisation d'information ID respective, une deuxième entrée couplée au moyen de combinaison logique (30) et une sortie couplée au moyen générateur de drapeau (34).

10. Système de transmission de messages selon l'une quelconque des revendications précédentes, où l'information ID comprend m bits ID et le moyen de mémorisation de type RAM (13) mémorise des informations ID prédéterminées reçues via le deuxième port (18), et où le deuxième moyen logique (48, 50, 21) comprend un moyen de comparaison (48) servant à comparer en série chacun des m bits ID des messages reçus avec des bits ID correspondants des informations ID prédéterminées, le deuxième moyen logique (48, 50, 21) produisant le signal lorsque les bits ID des messages reçus sont appariés avec les bits ID d'au moins une des informations ID prédéterminées qui sont mémorisées dans le moyen de mémorisation de type RAM (13).

11. Système de transmission de messages selon les revendications 8 et 10, où les informations ID prédéterminées sont mémorisées dans des zones (24) de mémorisation d'information ID du moyen tampon de réception (22) et le moyen de comparaison du deuxième moyen logique comprend une pluralité de comparateurs (48) correspondant à la pluralité d'emplacements de mémorisation de message du moyen tampon de réception (22), chaque comparateur (48) ayant une première entrée couplée au quatrième port (17), une deuxième entrée couplée à une zone (24) de mémorisation d'information ID respective et une sortie couplée à un moyen (50) générateur de drapeau d'appariement, le moyen (50) générateur de drapeau d'appariement produisant un drapeau pour chaque emplacement de mémorisation du moyen tampon de réception (22), chaque drapeau pouvant être commuté d'un premier état, qui indique un résultat de comparaison d'appariement, à un deuxième état, qui indique un résultat de comparaison de non-appariement en fonction du signal de sortie du comparateur respectif, où, après m cycles de comparaison consécutifs, le deuxième moyen logique (48, 50) produit le signal pour les emplacements de mémorisation ayant des drapeaux qui possèdent le premier état de sorte que les données du message reçu sont transférées du moyen de sortie série aux zones (26) de mémorisation de données des emplacements de mémorisation ayant des drapeaux qui possèdent le premier état.

12. Système de transmission de messages selon l'une quelconque des revendications précédentes, où le moyen de sortie série (15) comprend un premier registre à décalage (40) servant à transférer en série les données et un deuxième registre à décalage (38) servant à transférer en série l'information ID.

13. Système de traitement (2) comprenant :
un processeur principal (4) ;
une pluralité de dispositifs périphériques (6 à 8) ;
un système de transmission de messages (10, 12) tel que défini par l'une quelconque des revendications précédentes, servant à transférer des messages entre le processeur principal (4) et les dispositifs périphériques (6 à 8), le moyen de sortie série du système de transmission de messages étant couplé à la pluralité de dispositifs périphérique (6 à 8) via un bus série (9), et le processeur principal (4) étant couplé au deuxième port du système de transmission de messages (12).
